# EUROPEAN PATENT SPECIFICATION

(11) **EP 1 088 155 B1**
(45) Date of publication and mention of the grant of the patent: **15.05.2002**
(21) Application number: 99913473.7
(22) Date of filing: 29.03.1999
(51) Int. Cl.: F02B 31/06

(54) **ENGINE INTAKE SYSTEM**
ANSAUGSYSTEM FÜR BRENNKRAFTMASCHINE
SYSTEME D'ADMISSION POUR MOTEUR

(30) Priority: 13.06.1998 GB 9812749
(43) Date of publication of application: 04.04.2001
(73) Proprietor: Ford Global Technologies, Inc., Dearborn, Michigan 48126 (US)
(72) Inventor: MA, Thomas Tsoi Hei, Chelmsford Essex CM3 5YL (GB)
(74) Representative: Messulam, Alec Moses
(86) International application number: GB9900972
(87) International publication number: WO9966180

(56) References cited:
- EP-A- 0 459 374
- EP-A- 0 514 854
- US-A- 4 548 175
- US-A- 4 901 680

## Description

### Field of the invention

The present invention relates to an internal combustion engine having a swirl control valve in each intake port for partially obstructing the gas flow under certain operating conditions in order to improve mixture preparation.

### Background of the invention

In lean burn engines, it is has been proposed to provide a swirl control valve in the intake port to increase the lean burn limit of the engine. In engines with exhaust gas recirculation (EGR), it has also been proposed to provide a similar swirl control valve in the intake port to increase the EGR limit of the engine.

In the latter case, an effective method of introducing EGR to the engine is to increase the valve overlap of the engine by means of a variable valve timing system. In particular, with variable intake valve timing where the opening timing of the intake valve can be advanced deep into the exhaust stroke of the engine, a back flow of exhaust gases is forced into the intake port during the valve overlap period and later drawn into the engine cylinder during the intake period as internal EGR.

A problem is encountered when the above-mentioned swirl control valve and variable valve timing are used in combination in that the swirl control valve would cause a restriction to the back flow of exhaust gases into the intake part during the valve overlap period, therefore reducing the amount of internal EGR that can be achieved with variable valve timing.

### Summary of the invention

In order to mitigate the above problem, the present inerention provides an engine having an intake port containing a swirl control valve for partially obstructing the intake air flow in order to improve mixture preparation, and a rood valve mounted in the intake port to allow gas flow only from the combustion chamber into the intake port, thereby avoiding the obstruction presented to the back flow of exhaust gases by the swirl control valve during the valve overlap period of each engine operating cycle without interfering with the operation of the swirl control valve in the direction of forward flow during the intake period.

In the invention, the presence of the reed valve does not affect the performance of the swirl control valve in increasing the lean burn and EGR limits, but the amount of internal EGR that can be achieved with variable valve timing is no longer restricted by the swirl control valve.

The reed valve may be physically separate from the swirl control valve and mounted in parallel with it but it is preferred for the reed valve to be incorporated within and to move with the butterfly or diverter element of the swirl control valve. This makes for a more compact design in that no modification is required to the intake system and the invention can be implemented by simply changing the diverter element of the swirl control valve.

### Brief description of the drawings

The invention will now be described further, by way of example, with reference to the accompanying drawings, in which:
Figure 1 is a schematic representation of a combustion chamber having an intake system fitted with a swirl control valve embodying the invention,
Figure 1a is a view of the intake system of Figure 1 looking into the intake port at the diverter element of the swirl control valve, and
Figures 2 and 2a are views generally similar to Figures 1 and 1a respectively, showing the diverter element of the swirl control valve in an alternative position.

### Detailed description of the preferred embodiments

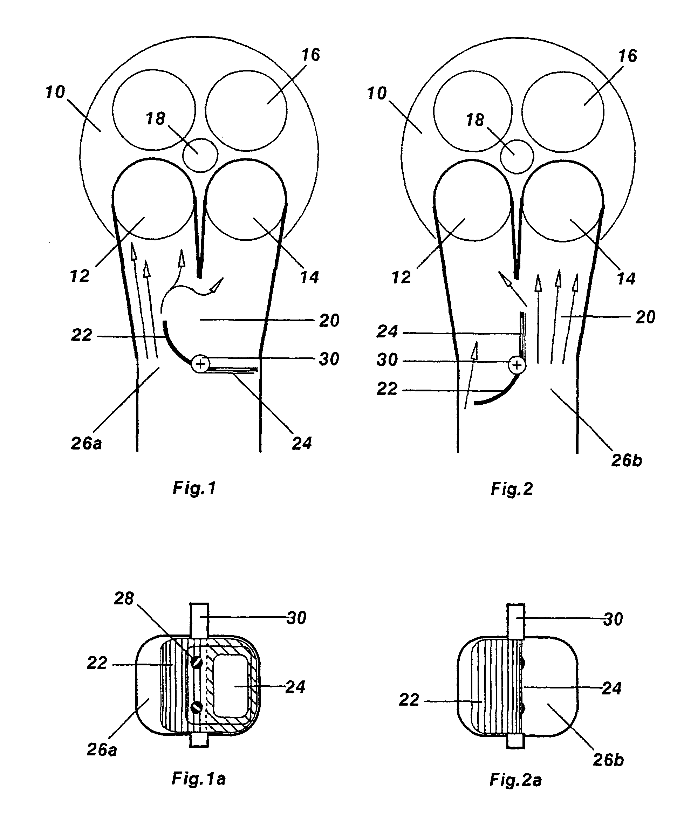

The drawing show a combustion chamber 10 having two intake valves 12 and 14, two exhaust valves 16, and a spark plug 18. The intake valves 12 and 14 are supplied with intake air by a siamesed intake port 20 containing a swirl control valve that consists of a butterfly-like flow diverter element 22 pivotable about a spindle 30 the axis of which is normal to the plane of the paper. The diverter element 22 is shown in Figure 1 in one end-position suitable for low load operation in which the intake air is constrained to flow through a narrow passage 26a towards the valve 12 thereby increasing its velocity and directing it to enter the combustion chamber tangentially as represented by the arrows in order to increase swirl. In its other end-position shown in Figure 2, the diverter element 22 allows unrestricted flow towards the valve 14 whilst still permitting some flow towards the valve 12. The air intake is therefore less obstructed for high load operation.

As so far described, the intake system is known per se. The disadvantaqe encounter with such a system is that the diverter element 22 obstructs flow in both directions and if special steps are taken to enhance internal EGR, such as altering the valve timing, then the swirl control valve interferes with the back flow of EGR gases into the intake port.

To avoid this problem the preferred embodiment of the present invention includes a reed valve built into the diverter element 22 of the swirl control valve. As seen in Figure 1a, the reed valve consists of a flexible closure flap 24, which may also be termed a reed,held by screws 28 on the spindle 30 of the diverter element 22 and biased by its own resilience to close an opening cut out of the diverter element 22. In the forward direction of gas flow, i.e. towards the combustion chamber, the valve is closed not only by the resilience of the flap 24, but also by the air pressure across the diverter element 22. The presence of the reed valve does not therefore affect the function of the swirl control valve in any of its positions.

When the intake valve opening time is advanced to extend the valve overlap period deep into the exhaust stroke of the engine, then a back flow of exhaust gases entering the intake system will occur creating a pressure across the reed valve that is sufficient to raise the flap 24 off its seat, allowing the gases to enter freely into the intake system. There will be a minimal drop in pressure across the swirl control valve to overcome the natural resilience of the flap 24.

The reed valve is most preferably incorporated into the diverter element 22 of the swirl control valve as this simplifies its implementation, but it will be appreciated that its function could be performed by a separate reed valve mounted in a passage bypassing the swirl control valve.

## Claims

1. An engine having an intake port (20) containing a swirl control valve (22) for partially obstructing the intake air flow in order to improve mixture preparation, **characterised in that** a reed valve (24) is mounted in the intake port (20) to allow gas flow only from the combustion chamber into the intake port, thereby avoiding the obstruction presented to the back flow of exhaust gases by the swirl control valve during the valve overlap period of each engine operating cycle without interfering with the operation of the swirl control valve in the direction of forward flow during the intake period.

2. An engine as claimed in claim 1, wherein the reed valve (24) is incorporated within the diverter element of the swirl control valve (22).

## Patentansprüche

1. Ein Motor, der einen ein Wirbel-Steuerventil (22) enthaltenden Einlaßkanal oder - Öffnung (20) besitzt, um den Ansaug-Luftstrom zur Verbesserung der Gemischaufbereitung teilweise zu versperren; **dadurch gekennzeichnet, daß** ein flexibles Ventil (24) im Einlaßkanal (20) montiert ist, um einen Gasstrom nur von der Verbrennungskammer in den Einlaßkanal hinein zuzulassen, um dadurch jene der Rückströmung von Abgasen durch das Wirbel-Steuerventil gebotene Versperrung während der Ventllüberlappungs-Periode jedes Motor-Betriebszyklus zu vermeiden, ohne während der Ansaugperiode den Betrieb des Wirbel-Steuerventils in der Richtung des vorwärts gerichteten Stromes zu stören.

2. Ein Motor gemäß Anspruch 1, in dem das flexible Ventil (24) innerhalb des Umlenkteils des Wirbel-Steuerventils (22) eingebaut ist.

## Revendications

1. Moteur comportant un orifice d'admission (20) contenant un clapet de commande de tourbillonnement (22) destiné à entraver partiellement l'écoulement d'air d'admission de manière à améliorer la préparation du mélange, **caractérisé en ce qu'**une soupape flexible (24) est montée dans l'orifice d'admission (20) afin de permettre un écoulement des gaz uniquement depuis la chambre de combustion jusque dans l'orifice d'admission, en évitant ainsi l'entravement présenté au retour des gaz d'échappement par le clapet de commande de tourbillonnement pendant la période de chevauchement des soupapes de chaque cycle de fonctionnement du moteur sans interférer avec le fonctionnement du clapet de commande de tourbillonnement dans la direction d'écoulement vers l'avant pendant la période d'admission.

2. Moteur selon la revendication 1, dans lequel la soupape flexible (24) est incorporée à l'intérieur de l'élément de déflecteur du clapet de commande de tourbillonnement (22).
